# EUROPÄISCHE PATENTANMELDUNG

(11) **EP 1 234 625 A1**
(43) Veröffentlichungstag der Anmeldung: **28.08.2002**
(21) Anmeldenummer: 01104121.7
(22) Anmeldetag: 21.02.2001
(51) Int. Cl.: B22F 3/105, B29C 67/00

(54) **Verfahren und Vorrichtung zur Herstellung eines Formkörpers durch selektives Laserschmelzen**

(71) Anmelder: Trumpf Werkzeugmaschinen GmbH + Co. KG, 71254 Ditzingen (DE)
(72) Erfinder: Lindemann, Markus, 70839 Gerlingen (DE); Graf, Daniel, 71254 Ditzingen (DE)
(74) Vertreter: Maser, Jochen, Dipl.-Ing.

(57) **Zusammenfassung**

Die Erfindung betrifft ein Verfahren zur Herstellung eines Formkörpers (29) durch selektives Laserschmelzen, bei dem aus pulverförmigem, metallischem Werkstoff nach CAD-Daten eines Modells ein Formkörper (29) aufgebaut wird, bei dem mit einer Auftragseinheit (34) eine Pulverschicht aufgetragen wird und bei dem die aufgetragene Pulverschicht durch einen fokussierten Laserstrahl (27) mit einer darunter liegenden Schicht fixiert wird, wobei die Pulverschicht durch zumindest einmaliges Überfahren des Formkörpers (29) mit einer Nivelliereinrichtung (39) auf eine Sollschichtdicke einnivelliert wird und während dem Einnivellieren über die Sollschichthöhe des aufgetragenen Pulvers hinausragende Erhöhungen (43) der zuletzt mit dem Laserstrahl (27) aufgeschmolzenen Schicht durch die Nivelliereinrichtung (39) freigelegt werden.

## Beschreibung

Die Erfindung betrifft ein Verfahren und eine Vorrichtung zum Herstellen eines Formkörpers durch selektives Laserschmelzen gemäß dem Oberbegriff des Anspruchs 1 beziehungsweise des Anspruchs 8.

Die vorliegende Erfindung bezieht sich auf eine Technik, die unter dem Namen Rapid Prototyping bekannt ist. Diese Rapid Prototyping-Verfahren werden bevorzugt in der Produktentwicklung eingesetzt, um die Produktentwicklungszeit zu verkürzen sowie die Produktqualität zu steigern. Dies wird dadurch ermöglicht, daß direkt aus einem dreidimensionalen CAD-Modell Prototypen hergestellt werden. Ein derartiges Verfahren ist aus der DE 196 49 865 C1 bekannt. Bei diesem bekannten Verfahren des selektiven Laserschmelzens können die Bauteile aus handelsüblichen Stählen bzw. Metalle hergestellt werden. Dazu wird der Werkstoff in Pulverform jeweils als dünne Schicht auf eine Bauplattform aufgebracht. Die Pulverschicht wird lokal entsprechend der gewünschten Bauteilgeometrie mit einem Laserstrahl aufgeschmolzen. Die Energie des Laserstrahls wird so gewählt, daß das metallische Werkstoffpulver an der Auftreffstelle des Laserstrahls über seine gesamte Schichtdicke vollständig aufgeschmolzen wird. Der Laserstrahl wird bei diesem Verfahren in mehreren Spuren derart über den vorgegebenen Bereich der jeweiligen Werkstoffpulverschicht geführt, daß jede folgende Spur des Laserstrahls die vorherige Spur teilweise überlappt. Gleichzeitig wird eine Schutzgasatmosphäre über die Wechselwirkungszone des Laserstrahls mit dem metallischen Werkstoffpulver aufrechterhalten, um Fehlstellen zu vermeiden, die beispielsweise durch Oxidation hervorgerufen werden können. Die mit diesem Verfahren hergestellten Bauteile aus Stahl erreichen bezüglich ihrer Dichte und Festigkeit die angegebenen Werkstoffspezifikationen. Eine Vorrichtung zur Durchführung des Verfahrens des selektiven Laserschmelzens geht aus der Figur 1 der DE 196 49 865 hervor.

Die Verteilung des metallischen Werkstoffpulvers über der Bauplattform beziehungsweise dem Bauraum erfolgt durch eine Nivelliereinrichtung, beispielsweise durch eine Linearbewegung eines Schiebers über den Vorratsbehälter des Werkstoffpulvers und dem Bauraum. Der Schieber verteilt nach jeder mit dem Laserstrahl bearbeiteten Schicht neues Pulver über das um die nachfolgend aufzutragende Schichtdicke abgesenkte Bauteil. Die mit dem Laserstrahl bearbeitete Schicht ist jedoch nicht ideal glatt. Sie weist Unebenheiten und Überhöhungen auf, die teilweise größer als die aufzutragende Schichtdicke ist. An diesen Stellen schleift die Unterseite des Schiebers beim Auftragen der neuen Pulverschicht über die zuletzt durch den Laserstrahl bearbeitete Schicht. Durch die passive Wirkung wird der Schieber zunehmend beschädigt und unterliegt einem Verschleiß, so daß mit zunehmender Betriebsdauer die Sollschichtdicke nicht mehr eben aufgetragen wird oder sogar zunimmt.

Bei sehr feinen oder filigranen Strukturen eines Prototypen, beispielsweise bei einem säulenartigen Aufbau mit sehr dünnen Wandstärken, tritt darüber hinaus das Problem auf, daß an dem aufgebauten Formkörper Beschädigungen durch die Linearbewegung des Schiebers auftreten können.

Um dieses Verfahren zu verbessern, wird durch die DE 198 53 978 C1 eine Vorrichtung vorgeschlagen, bei der vor der Nivelliereinrichtung eine Schleifeinrichtung in Form einer Walze befestigt ist, die die Oberfläche jeder durch den Laserstrahl bearbeiteten Schicht vor dem Beschichten mit einer neuen Pulverschicht glätten kann.

Diese Schleifeinrichtung ist in der Höhe gleich zur Nivelliereinrichtung eingestellt, so daß die über die aufzutragende Dicke der Pulverschicht hinausragenden Unebenheiten oder Überhöhungen durch die Schleifeinrichtung geglättet werden. Dadurch kann der Kontakt als auch der Verschleiß zwischen der Nivelliereinrichtung und dem Bauteil vermieden werden.

Diese Vorrichtung weist jedoch ebenfalls den Nachteil auf, daß insbesondere beim Aufbau von sehr feinen filigranen Strukturen durch das Angreifen der Schleifeinrichtung an den Überhöhungen und/oder durch die Vorschubgeschwindigkeit Beschädigungen oder Zerstörungen der aufgebauten Geometrien auftreten. Selbst bei großflächigeren Strukturen können insbesondere in der Anfangsphase während des ersten Eingriffs der Schleifeinrichtung an den Überhöhungen des Formkörpers Beschädigungen auftreten.

Der Erfindung liegt deshalb die Aufgabe zugrunde, ein Verfahren und eine Vorrichtung zur Herstellung eines Formkörpers durch selektives Laserschmelzen anzugeben, das beziehungsweise die einen Verschleiß der Nivelliereinrichtung vermeidet, kostengünstig in der Ausgestaltung und Durchführung ist und den Aufbau von Schichten konstanter Dicke, insbesondere auch bei filigranen Strukturen, ermöglicht.

Diese Aufgabe wird erfindungsgemäß durch ein Verfahren mit den Merkmalen des Anspruchs 1 beziehungsweise durch eine Vorrichtung mit den Merkmalen des Anspruchs 8 gelöst.

Durch das erfindungsgemäße Verfahren ist ermöglicht, daß unabhängig von Überhöhungen oder Unebenheiten auf einer zuletzt aufgeschmolzenen Schicht des Formkörpers, die größer als die aufzutragende Dicke der Pulverschicht sind, zumindest auf die Bereiche der Oberfläche der Formkörpers eine Pulverschicht aufgetragen wird, welche unterhalb oder an eine Ebene angrenzen, die durch die vorbestimmte Schichtstärke für die nächstfolgende zu verarbeitende Pulverschicht bestimmt wird. Es hat sich erstaunlicherweise gezeigt, daß ein Abtragen der über die aufzutragende Pulverschichtdicke hinausragenden Überhöhungen oder Unebenheiten nicht erforderlich ist.

Durch dieses Verfahren wird ein gleichmäßigerer Aufbau der Schicht sichergestellt. Die Überhöhungen oder Unebenheiten können mit dem Aufbau der zumindest einen nachfolgenden Schicht kompensiert beziehungsweise integriert werden, da an diesen Überhöhungen oder Unebenheiten kein Auftrag des Werkstoffpulvers gegeben ist.

Bei der Führung des Laserstrahls in mehreren Spuren über einen vorgesehenen Bereich wird nicht nur die aufgetragene Schichtdicke des Werkstoffpulvers vollständig aufgeschmolzen, sondern auch die Überhöhungen oder Unebenheiten, welche über die Werkstoffschicht hinausragen, werden in den vorgegebenen Bereichen zumindest angeschmolzen, wodurch eine zusätzliche Einnivellierung der Überhöhungen zur Bildung eines gleichmäßigeren neuen Schichtniveaus ermöglicht wird. Dadurch wird eine Integration der Überhöhungen oder Unebenheiten mit der aufgeschmolzenen Schicht erzielt.

Durch dieses erfindungsgemäße Verfahren kann auch ein Verfahrensschritt, der gemäß der DE 198 53 978 das Abschleifen von Überhöhungen mit einer Schleifeinrichtung umfaßt, eingespart werden. Darüber hinaus erfolgt kein mechanischer Eintrag auf den Formkörper, wodurch auch das Aufbauen von filigranen Strukturen ermöglicht ist.

Das erfindungsgemäße Verfahren zum selektiven Auftragen einer Pulverschicht auf eine Sollschichtdicke, welche im Anschluß mittels eines Laserstrahls aufgeschweißt und auf der darunterliegenden Schicht fixiert wird, kann durch zwei Prinzipien erfolgen.

Ein erstes Prinzip liegt darin, daß der Pulverauftrag nur an den Stellen oder auf den oder die Bereiche erfolgt, welche unterhalb einer Ebene und/oder an diese angrenzend liegen, die durch die Sollschichtdicke gebildet wird. Dadurch können die Überhöhungen oder auch flächige Bereiche, welche oberhalb der Sollschichtdicke für den Pulverauftrag liegen, ausgespart werden. Ein weiteres Anwachsen der Unebenheiten oder Überhöhungen kann dadurch während dem Aufschmelzen der Pulverschicht verhindert sein.

Das zweite Prinzip ist darin zu sehen, daß eine Pulverschicht aufgetragen wird, welche zumindest die Sollschichtdicke für die aufzuschmelzende Werkstoffpulverschicht durch den Laserstrahl umfaßt und der darüberliegende Anteil der Pulverschicht durch Abziehen, Abtragen, Abblasen, Absaugen oder weiteren Arten zur Entfernung der Pulverschicht erfolgen. Dadurch werden wiederum selektiv nur diejenigen Bereiche der Oberfläche des Formkörpers mit einer Pulverschicht versehen, welche unterhalb und/oder angrenzend an einer Ebene liegen, die durch die vorbestimmte Schichtstärke für die nächstfolgende zu bearbeitende Pulverschicht gebildet wird.

Nach einer vorteilhaften Ausgestaltung des Verfahrens ist vorgesehen, daß diejenigen Bereiche, die unterhalb und/oder angrenzend an der Ebene der vorbestimmten Schichtstärke für die nächstfolgende zu verarbeitende Pulverschicht liegen mittels einer Einrichtung erfaßt werden und daß das Werkstoffpulver fein dosiert in diesen Bereichen aufgetragen wird und daß vorzugsweise die Auftragseinheit ein-oder mehrmalig über der Oberfläche des Formkörpers positioniert wird oder diesen überfährt. Dadurch kann ein gezieltes Anwachsen der Pulverschicht in den unterhalb der Ebene der vorbestimmten Schichtstärke für die nächstfolgende zu verarbeitende Pulverschicht erzielt werden. Die zu beschichtenden Bereiche werden abgescannt oder auch durch einen Taster oder Sensor abgetastet. Die erfaßten Werte werden im ersten Fall durch ein Rechenprogramm erfaßt, um anschließend die Menge an Pulver definiert an diesen Stellen vorzusehen. Dies kann beispielsweise durch einmaliges Positionieren der Auftragseinheit über der Oberfläche des Formkörpers sein. Dafür kann beispielsweise eine Matrize mit einer Vielzahl von Pulveröffnungen vorgesehen sein, welche in den erfaßten Bereichen eine vorbestimmte Menge des Werkstoffpulvers aufträgt. Die vorbestimmte Menge kann bis hin zum vereinzelten Auftrag von Pulverkörnern erfolgen. Alternativ kann auch ein ein- oder mehrmaliges Überfahren der Auftrageinheit zum Auftrag der Werkstoffschicht vorgesehen sein.

Durch die Einnivellierung der Schicht des aufgetragenen Werkstoffpulvers und das Freilegen der Überhöhungen wird ebenfalls ein selektiver Auftrag ermöglicht, insbesondere durch Abziehen von Pulverschichten, welche oberhalb der Ebene liegen, welche durch die Sollschichtdicke der nachfolgend zu verarbeitenden Werkstoffpulverschicht gegeben ist. Gleichzeitig können die Überhöhungen oder Unebenheiten oberhalb der Ebene freigelegt werden und die zwischen den Überhöhungen oder Unebenheiten ausgebildeten Täler vollständig mit dem Werkstoffpulver entsprechend der aufzutragenden Schichtdicke aufgefüllt werden, so daß ein gleichmäßiges Anwachsen von Schichten, insbesondere auch bei filigranen Strukturen, ermöglicht ist.

Nach einer vorteilhaften Ausgestaltung des Verfahrens ist vorgesehen, daß der Formkörper von der Nivelliereinrichtung zumindest zweimal, vorzugsweise dreimal, überfahren wird, so daß eine vollständige Einnivellierung der zwischen den Unebenheiten oder Erhöhungen gebildeten Täler sichergestellt wird. Durch das zumindest zweimalige Überfahren werden von zwei entgegengesetzten Verfahrrichtungen Werkstoffpulver an die Täler nahe der Überhöhungen herangeführt. Durch die Nivelliereinrichtung werden die seitlichen Bereiche der Überhöhungen ebenfalls einnivelliert, so daß eine vollständige und gleichmäßige Einnivellierung des Werkstoffpulvers auf der darunterliegenden Schicht erfolgt. Dadurch kann nach dem Aufschmelzen des Werkstoffpulvers der Laserstrahl, der in mehreren Spuren über den vorgegebenen Bereich geführt ist, die Ebenheit der neu entstehenden Oberfläche über den vorgegebenen Bereich verbessert werden.

Zur Durchführung des Verfahrens ist erfindungsgemäß eine Vorrichtung vorgesehen, welche Mittel zum selektiven Auftragen von Werkstoffpulver auf bestimmten Bereichen einer Oberfläche eines Formkörpers ermöglicht. Diese Mittel können an der Auftrageinheit integriert oder daran vorgesehen sein. Beispielsweise kann die Auftrageinheit zumindest eine Reihe von düsenförmigen Öffnungen aufweisen, bei der jede einzelne Düse oder Öffnung für den selektiven Auftrag ansteuerbar ist. Ebenso können mehrere Reihen der Öffnungen vorgesehen sein, die auch zumindest teilweise zueinander versetzt angeordnet sind, um an jeder beliebigen Stelle der Oberfläche des Formkörpers in Abhängigkeit der Oberflächenstruktur einen selektiven Auftrag des Werkstoffpulvers zu ermöglichen. Ein weiteres Mittel zum selektiven Auftrag kann darin bestehen, daß beim Überfahren der mit Werkstoffpulver zu versehenden Oberfläche Abtastelemente vorgesehen sind, welche während dem Überfahren von Überhöhungen oder Unebenheiten, welche oberhalb der aufzutragenden Schichtdicke des Werkstoffpulvers liegen, ein automatisches Verschließen zumindest einer Sektion der Öffnung ermöglichen. Die Auftrageinheit für dieses selektive Verfahren kann eine Art Siebstruktur aufweisen, welche durch geeignete Ansteuerung unterschiedliche Öffnungen des Siebes öffnet oder schließt. Des weiteren kann eine Abblasvorrichtung, Absaugvorrichtung, walzenförmige Abtragvorrichtung oder ein elektrostatisches Feld oder dergleichen vorgesehen sein, um beispielsweise das Werkstoffpulver an der oder den Stellen abzutragen, abzunehmen, abzuziehen oder abzusaugen, welche oberhalb der Ebene der vorbestimmten Schichtdicke für die nachfolgende Überarbeitung der aufzutragenden Werkstoffpulverschicht liegt.

Zur Durchführung des Verfahrens ist vorteilhafterweise eine Vorrichtung vorgesehen, welche eine Nivelliervorrichtung mit Einzelelementen umfaßt, die die Pulverschicht auf die eingestellte Sollschichtdicke nach dem Auftragen abzieht und die über die aufzutragende Schichtdicke hinausragende Überhöhungen der Pulverschicht freilegt. Dies weist den Vorteil auf, daß die Überhöhungen nicht weiter Anwachsen und beim Aufschmelzen der Werkstoffpulverschicht zumindest teilweise integriert werden.

Bei dem Einsatz von Abstreifelementen, wie dies aus dem Stand der Technik bekannt ist, kann es beim Überfahren des Formkörpers entweder zu Beschädigungen des Formkörpers kommen oder aber die Schichtdicke ist größer als die eingestellte Sollschichtdicke, um die Überhöhungen gefahrlos zu überfahren. Dadurch ist ein vollständiges Aufschmelzen der Schicht des aufgetragenen Werkstoffpulvers nicht möglich. Sollte das flexible Abstreifelement auf die Höhe der Sollschichtdicke eingestellt sein und auf Überhöhungen treffen, so werden während dem Überwinden der Überhöhung seitliche Pulverschichtanhäufungen ausgebildet. Unmittelbar nach dem Überwinden der Überhöhung wird ein Nachschwingen des Abstreifers erzeugt, wodurch eine Vertiefung in der Schicht verbleibt. Dies führt zu einer unregelmäßigen Schichtdicke mit der Folge, daß die Unebenheit oder Überhöhungen verstärkt werden. Gerade dieser Effekt wird durch die erfindungsgemäße Ausgestaltung der Nivelliereinrichtung beseitigt.

Die Nivelliereinrichtung weist vorteilhafterweise zumindest eine Reihe von Einzelelementen auf, die beim Überfahren von Überhöhungen auslenkbar sind. Dadurch kann erzielt werden, daß die Überhöhungen oder Unebenheiten beim Überfahren des Formkörpers zwischen den Einzelelementen hindurchtreten können, wodurch eine gleichmäßige Einnivellierung erzielt wird. Gleichzeitig tritt kein Verschleiß gegenüber einem Abstreifelement auf, welches starr oder flexibel mit einer über die Breite des Bauraums durchgehenden Abstreifkante zur Einnivellierung des Werkstoffpulvers ausgebildet ist. Des weiteren weist diese Ausgestaltung den Vorteil auf, daß nur ein oder mehrere Einzelelemente ausgelenkt werden und ein Nachfedern des und der Einzelelemente nach einem möglichen Auslenken nahezu ohne Störeinfluß ist, da die Einzelelemente im Verhältnis sehr schmal oder dünn ausgebildet sind. Darüber hinaus weisen die Einzelelemente einen äußerst geringen Widerstand auf, so daß auch Beschädigungen an filigranen Strukturen ausbleiben.

Zur Einnivellierung einer konstanten Schichtdicke des aufgetragenen Werkstoffpulvers ist vorteilhafterweise vorgesehen, daß die freien Enden der Einzelelemente in einer gemeinsamen Ebene liegen, wodurch fiktiv eine durchgehende Kante gebildet wird, welche ein gleichmäßiges Abziehen der aufgetragenen Schicht des Werkstoffpulvers ermöglicht.

Die Nivelliereinrichtung ist vorteilhafterweise als Bürste ausgebildet, welche mehrere Borsten in einer Reihe und zumindest zwei Reihen von Borsten als Einzelelemente aufweist. Dadurch ist ermöglicht, daß ein relativ dichter Vorhang durch die Borsten erzielt wird, der ermöglicht, daß eine hinreichende Menge an Werkstoffpulver vor der Nivelliereinrichtung vorgesehen sein kann, welche durch die Linearbewegung über den Formkörper hinweggeführt werden kann, um eine konstante Schichtdicke aufzutragen. Des weiteren weist die Ausgestaltung von wenigstens zwei Reihen von Borsten den Vorteil auf, daß ein Nachschwingen einer Borste bei der Auslenkung an einer Überhöhung durch die unmittelbar benachbarte Borste gedämpft und stark beruhigt wird, so daß Unebenheiten in der Werkstoffpulverschicht durch das Nachschwingen vermieden werden.

Als vorteilhafte alternative Ausführungsform der Nivelliereinrichtung ist eine Lippe mit wenigstens einer Reihe von Lamellen vorgesehen. Diese Lamellen sind vorzugsweise streifenförmig ausgebildet und einzeln auslenkbar. In Abhängigkeit des verwendeten Materials kann beispielsweise bei einem Material mit einer hohen Federrate eine längere Lamelle ausgebildet sein als bei einem Material mit einer geringen Federrate. Die Lamellen sind beispielsweise aus einer dünnen Blechschicht ausgeschnitten, vorzugsweise durch Laserschneiden, wodurch die Kanten der unmittelbar zueinander benachbarten Lamellen gratfrei ausgebildet sind, um unabhängig voneinander eine Auslenkbewegung durchzuführen.

Die Lamellen können vorteilhafterweise eine Beschichtung aufweisen oder weitere Schichten, die eine dämpfende Wirkung auf ausgelenkte Lamellen haben.

Eine weitere alternative Ausführungsform der Nivelliereinrichtung ist durch eine gelenkige Anordnung der Einzelelemente gegeben. Dadurch kann die Auslenkung des Einzelelements an einem Aufhängepunkt erfolgen, wodurch zusätzlich zur Durchbiegung des Einzelelements ein weiterer Freiheitsgrad gegeben ist. Vorteilhafterweise ist nahe dem Auslenkpunkt der Einzelelemente ein- oder beidseitig ein Dämpfungselement vorgesehen, um die Einzelelemente nach einer Auslenkung durch die Überhöhungen oder die Unebenheiten schnell und gedämpft in den nicht ausgelenkten Zustand überzuführen.

Weitere vorteilhafte Ausgestaltungen und Weiterbildungen des Verfahrens und der Vorrichtung sind in den weiteren Ansprüchen angegeben.

In der nachfolgenden Beschreibung wird das erfindungsgemäße Verfahren sowie erfindungsgemäße Ausführungsformen der Vorrichtung zur Durchführung des Verfahrens näher beschrieben. Es zeigen:
- Figur 1: eine schematische Darstellung einer Vorrichtung zur Herstellung eines Formkörpers gemäß dem erfindungsgemäßen Verfahren,
- Figur 2: eine vergrößerte schematische Darstellung der Nivelliereinrichtung zur Durchführung des Verfahrens,
- Figur 3 a, b und c: eine schematische Ansicht einer Linearbewegung der Nivelliereinrichtung in zeitlich aufeinanderfolgenden Schritten,
- Figur 4 a und b: eine schematische Seitenansicht und Schnittdarstellung einer alternativen Ausführungsform einer Nivelliereinrichtung,
- Figur 5 a und b: eine schematische Vorder- und Seitenansicht einer weiteren alternativen Ausgestaltung einer Nivelliereinrichtung,
- Figur 6: eine schematische Seitenansicht einer weiteren alternativen Ausgestaltung der Nivelliereinrichtung und
- Figur 7: eine schematische Seitenansicht einer alternativen Auftrageinheit zum Aufbringen der Werkstoffpulverschicht.

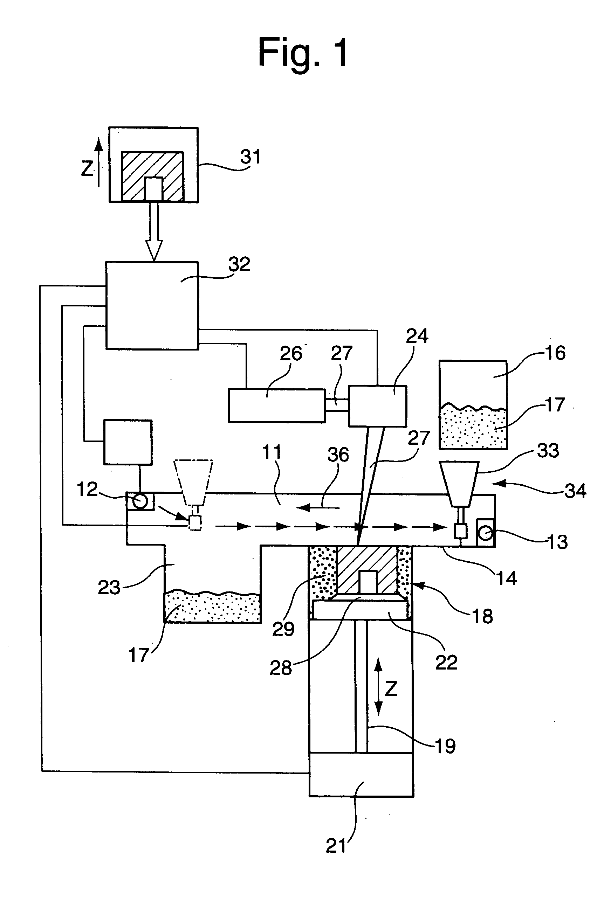

In Figur 1 ist eine Vorrichtung zum selektiven Laserschmelzen, wie beispielsweise in der DE 198 53 978 C1 beschrieben ist, dargestellt. Die Vorrichtung umfaßt eine Prozeßkammer 11 mit einem Schutzgaseinlaß 12, der im Bereich der oberen Seitenkante der Prozeßkammer 11 angeordnet ist, sowie einem Schutzgasauslaß 13 an der gegenüberliegenden Kante, der im Bereich einer Bodenfläche 14 der Prozeßkammer 11 angeordnet ist.

Oberhalb der Bodenfläche 14 ist ein Vorratsbehälter 16 vorgesehen, der mit metallischem Werkstoffpulver 17 gefüllt ist. Als Pulver kann beispielsweise Stahl, Titan, Aluminium verwendet werden. Unterhalb der Bodenfläche 14 in der Prozeßkammer 11 ist eine Aufbaukammer 18 vorgesehen, in der ein über einen Hubkolben 19 durch den Antrieb 21 angetriebenen Hubtisch 22 angeordnet ist. Neben der Aufbaukammer 18 ist ein Auffangbehälter 23 für das metallische Werkstoffpulver 17 vorgesehen. Oberhalb der Prozeßkammer 11 im Bereich der Aufbaukammer 18 ist eine Abtasteinrichtung 24 vorgesehen, die einen von einem Laser 26 erzeugten Laserstrahl 27 auf den Hubtisch 22 mit einer Bauplattform 28 richtet.

Um einen Formkörper 29, beispielsweise den Prototyp eines Bauteils, herzustellen, werden zunächst über eine Eingabeeinheit 31 die Bauteilkoordinaten in die zentrale Verarbeitungseinheit 32 eingegeben. Nach entsprechender Aufbereitung der Daten wird der Hubtisch 22 in der Aufbaukammer 18 in eine erste obere Stellung verfahren, in der die Auflagefläche entsprechend einer aufzutragenden Pulverschichtdicke unterhalb dem Niveau der Bodenfläche 14 liegt. Aus dem Vorratsbehälter 16 wird ein vorbestimmter Betrag an feinkörnigem Werkstoffpulver 17 aus Metall in einen Aufnahmebehälter 33 einer Auftrageinheit 34 eingefüllt. Zum Auftragen des Werkstoffpulvers 17 wird die Auftrageinheit 34 gemäß Pfeil 36 über die Bodenfläche 14 zumindest einmal über den aufzubauenden Formkörper hinweg bis zum Auffangbehälter 23 bewegt. In dieser Endposition wird das nicht benötigte Werkstoffpulver 17 in den Auffangbehälter 23 abgefüllt. Es kann auch vorgesehen sein, daß ein mehrmaliges Überfahren des Formkörpers 29 erfolgt, wobei die Auftrageinheit 34 erst am Ende der Fahrstecke über dem Auffangbehälter 23 positioniert wird.

Nachdem diese vorbereitende Maßnahme abgeschlossen ist, werden der Laser 26 und die Abtasteinrichtung 24 angesteuert, um den Laserstrahl 27 auf das über der Bauplattform befindliche metallische Werkstoffpulver 17 zu richten und um entsprechend den Koordinaten dasjenige Pulver aufzuschmelzen, daß der untersten Schicht des Formkörpers 16 entspricht. Nachdem die unterste Schicht des Formkörpers 16 gebildet ist, wird der Hubtisch 22 um einen definierten Abstand nach unten verfahren, so daß die Oberseite der ersten Schicht geringfügig unterhalb der Ebene der Bodenfläche 14 der Prozeßkammer 11 liegt. Danach wird wiederum die Auftrageinheit 34 betätigt, um eine definierte Pulverschicht auf dem Formkörper 16 aufzutragen. Danach wird der Laserstrahl 27 wieder Spur für Spur entsprechend den Bauteilkoordinaten über das Pulver gefahren, um dieses aufzuschmelzen. Dieses spurweise Verfahren zum Aufschmelzen der Pulverschicht ist in der DE 196 49 865 C1 näher beschrieben.

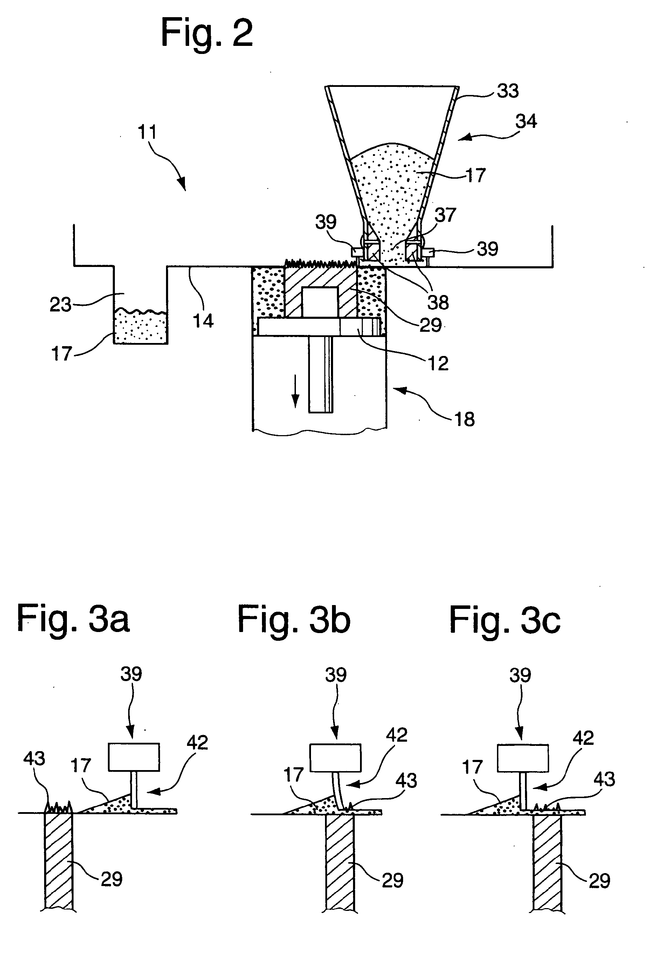

In Figur 2 ist ein vergrößerter Ausschnitt der Prozeßkammer 11 sowie eine vergrößerte Darstellung der Auftrageinheit 34 dargestellt. In dem Aufnahmebehälter 33 ist das Werkstoffpulver 17 vorgesehen. An dem unteren Ende des Aufnahmebehälters 33 tritt das Werkstoffpulver 17 über eine Öffnung 37 während der Hinund Herbewegung aus. Die Öffnung 37 ist durch Leisten 38 begrenzt, wobei die Öffnungsbreite über eine oder beide Leisten 38 vorzugsweise einstellbar ist, um die Menge des austretenden Werkstoffpulvers 17 zu bestimmen. Die Auftrageinheit 34 weist nahe der Öffnung 37 vor und nach der Öffnung 37 eine Nivelliereinrichtung 39 auf, welche das Werkstoffpulver 17 auf die vorbestimmte Sollschichtdicke einnivelliert. Alternativ kann vorgesehen sein, daß auch nur auf einer der beiden Seiten der Öffnung 37 beziehungsweise der Öffnung 37 vorauseilend oder nacheilend eine Nivelliereinrichtung 39 vorgesehen ist. Nachfolgend wird die Funktion der Nivelliereinrichtung 39 anhand der Figuren 3 a bis c näher erläutert.

Die Nivelliereinrichtung 39 wird auf das Niveau der Bodenfläche 14 einnivelliert, so daß der Pulverauftrag in der Aufbaukammer 18 erfolgt. Alternativ kann vorgesehen sein, daß die Nivelliereinrichtung 39 auf eine Höhe oberhalb der Bodenfläche 14 einjustiert wird, welche der aufzutragenden Sollschichtdicke entspricht. In diesem Fall liegt die Oberfläche des Formkörpers 29, auf welchem die Schicht des Werkstoffpulvers aufgetragen wird, auf dem Niveau der Bodenfläche 14.

In den Figuren 3 a bis c ist die Nivelliereinrichtung 39 in einer Seitenansicht dargestellt. Die Nivelliereinrichtung 39 besteht aus einer Vielzahl in einer Reihe angeordneten Einzelelementen 42. In der in Figur 3 dargestellten Ausführungsform sind die Einzelelemente 42 als Borsten einer Bürste ausgebildet. Diese Borsten sind vorteilhafterweise durch dünne Metalldrähte oder -lamellen vorgesehen. Alternativ können auch Borsten aus Kunststoff oder dergleichen vorgesehen sein. Die Borsten können darüber hinaus auch eine Beschichtung oder eine Struktur aufweisen. Die in Figur 3 dargestellte Bürste weist mehrere Reihen mit Einzelelementen 42 auf, die hintereinander angeordnet sind. Die Packungsdichte ist derart vorgesehen, daß bei einer Linearbewegung über dem Formkörper 29 ein Abzieheffekt entsteht, so daß eine vorbestimmte Höhe an Werkstoffpulver 17 einnivelliert wird. Die Einzelelemente 42 der Nivelliereinrichtung 39 weisen freie Enden auf, die vorzugsweise in einer gemeinsamen Ebene liegen, so daß die freien Enden eine fiktiv durchgezogene Abziehkante bilden.

Der Formkörper 29 weist nach dem Aufschmelzen des Werkstoffpulvers 17 als nunmehr unterste Schicht Unebenheiten und Überhöhungen 43 auf, die höher als die aufzutragende Sollschichtdicke sind. Diese Überhöhungen 43 entstehen während dem Aufschmelzen und werden auch als Schweißspritzer bezeichnet. Vorzugsweise werden Werkstoffschichten zwischen 10 und 100 um aufgetragen, und die Überhöhungen können sogar ein Mehrfaches der Werkstoffschicht betragen.

Die Position der Nivelliereinrichtung 39 in Figur 3 a entspricht der Darstellung in Figur 2. Vor den Einzelelementen 42 der Nivelliereinrichtung 39 ist eine Anhäufung von Metallpulver 17 gegeben, welches aus der Öffnung 37 austritt. Beim Überfahren des Formkörpers 29 fällt das Werkstoffpulver 17 auf die zuletzt aufgeschmolzene Schicht auf. Durch das Austreten des Werkstoffpulvers 12 von oben kann zusätzlich eine gute Füllwirkung der Täler erzielt werden. Die Nivelliereinrichtung 39 wird auf der voreingestellten Dicke der aufzutragenden Werkstoffschichtdicke über die Oberfläche des Formkörpers 29 geführt, wobei das oder die Einzelelemente 42 gegenüber dem Niveau der Werkstoffschicht hinausragenden Überhöhungen 43 ausweichen, abgelenkt oder ausgelenkt werden. Dadurch wird ermöglicht, daß aufgrund der Überhöhung 43 beispielsweise ein, zwei oder mehrere Einzelelemente 42 ihre Istlage verlassen und die übrigen Einzelelemente 42 eine gleichmäßige Verteilung und Einnivellierung des Werkstoffpulvers 17 ermöglichen. Dadurch wird, wie in Figur 3 b dargestellt ist, der Zwischenraum oder die Täler zwischen den Überhöhungen gleichmäßig mit Werkstoffpulver befüllt. Durch die Einzelelemente 42 der Nivelliereinrichtung 39 erfolgt quasi ein Durchkämmen der unebenen und rauhen Oberfläche. Nach dem Überfahren des Formkörpers 29 sind sämtliche Einzelelemente 42 der Nivelliereinrichtung 39 wieder in der Istlage und führen das überschüssige Werkstoffpulver in den Auffangbehälter 23.

Vorteilhafterweise wird der Formkörper 29 zumindest ein weiteres Mal von der anderen Richtung überfahren. Dadurch können die Überhöhungen 33 von zumindest zwei Bewegungsrichtungen her vollständig mit Werkstoffpulver 17 aufgefüllt werden. Diese Verfahrensweise weist den Vorteil auf, daß um die Überhöhungen 43 herum Werkstoffpulver 17 mit einem gleichen Niveau vorgesehen ist. Dadurch kann beim nachfolgenden Aufschmelzen des Werkstoffpulvers 17 durch den Laserstrahl 27 die Überhöhung 43 in die neu aufgeschmolzene Schicht integriert werden und gegebenenfalls durch Anschmelzen vollständig in der neu aufgeschmolzenen Schicht aufgehen.

Durch diese Verfahrensweise können insbesondere auch filigrane Strukturen aufgebaut werden, da das Einnivellieren der Werkstoffschicht mit der erfindungsgemäßen Nivelliereinrichtung durch Einzelelemente 42 nahezu kraftfrei erfolgt.

Es kann auch vorgesehen sein, daß das Überfahren des Formkörpers mit der Nivelliereinrichtung aus mehreren unterschiedlichen beziehungsweise voneinander abweichenden Richtungen erfolgt. Ebenso kann vorgesehen sein, daß eine oder zwei Nivelliereinrichtungen 39 mit der Auftrageinheit 34 gekoppelt sind und getrennt dazu weitere Nivelliereinrichtungen 39 vorgesehen sind, die aus unterschiedlichen Richtungen den Formkörper 29 überfahren.

Des weiteren kann alternativ vorgesehen sein, daß das Überfahren des Formkörpers 29 mit der Nivelliereinrichtung 39 anstelle einer geradlinigen Bewegung auch eine kreisförmige Bewegung oder elliptische Bewegung erfolgen kann. Eine Kombination der Bewegungsformen ist ebenso möglich. Zusätzlich kann vorgesehen sein, daß die Nivelliereinrichtung 39 selbst zusätzlich zur linearen Bewegungskomponente beim Überfahren des Formkörpers eine weitere Bewegungskomponente aufweist. Dies kann neben einer oszillierenden Bewegung wie einer Schwingungsbewegung auch eine rotierende Bewegung sein. Beispielsweise kann bei einem Überfahren des Formkörpers mittels einer Linearbewegung eine Überlagerung durch eine rotierende Nivelliereinrichtung, insbesondere bei Bürsten, gegeben sein.

Die in Figur 3 a bis c beschriebene als Bürste ausgebildete Nivelliereinrichtung weist den Vorteil auf, daß aufgrund der Auslenkung von einer oder mehreren Borsten ein Zurückfedern der Borsten durch die unmittelbar darum liegenden Borsten sofort gebremst und unterbunden wird, wodurch Störungen beim weiteren Auftrag nicht gegeben sind.

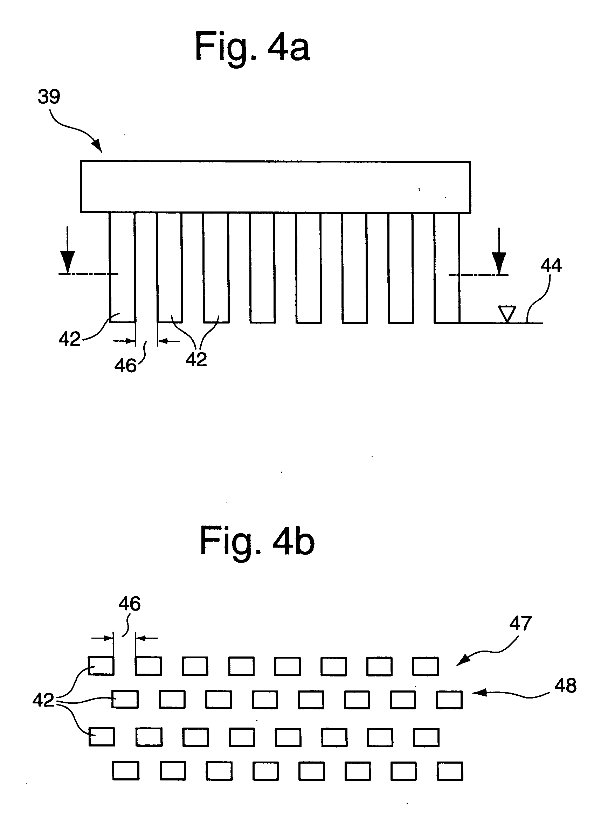

In den Figuren 4 a und b ist eine alternative Ausführungsform einer Nivelliereinrichtung 39 vorgesehen. Die Einzelelemente 42 sind lamellenförmig oder streifenförmig ausgebildet und in einem Abstand 46 zueinander angeordnet. In Analogie zu einer ersten Reihe 47 ist eine zweite Reihe 48 der Einzelelemente 42 vorgesehen, die jedoch auf Lücke zu der ersten Reihe 47 angeordnet sind. In Abhängigkeit des Anwendungsfalles kann sich sowohl die erste als auch die zweite Reihe 47, 48 mehrfach wiederholen.

Alternativ kann auch vorgesehen sein, daß die erste, zweite und gegebenenfalls weitere Reihen nicht auf Lücke, sondern teilweise mit den Einzelelementen 42 der vorherigen Reihe überlappend angeordnet sind. Auch der Abstand zwischen den beiden oder mehreren Reihen ist variabel. Die Einzelelemente 42 sind vorteilhafterweise aus sehr dünnen Blechschichten hergestellt. Ebenso können runde Borsten oder andere Geometrien für Einzelelemente 42 vorgesehen sein. Auch bei dieser Ausführungsform ist wie bei der in Figur 3 beschriebenen Ausführungsform vorgesehen, daß die freien Enden der Einzelelemente 42 in einer Ebene 44 liegen.

Die Länge und Stärke der Einzelelemente 42 ist unter Berücksichtigung des Materials und dessen Federrate derart ausgelegt, daß vorzugsweise nach Auslenkung eines Einzelelementes 42 durch eine Überhöhung 43 die nachfolgende Schwingung einer aperiodischen Dämpfung angenähert ist. Dies ist das Ziel aller erfindungsgemäßen Ausführungsformen.

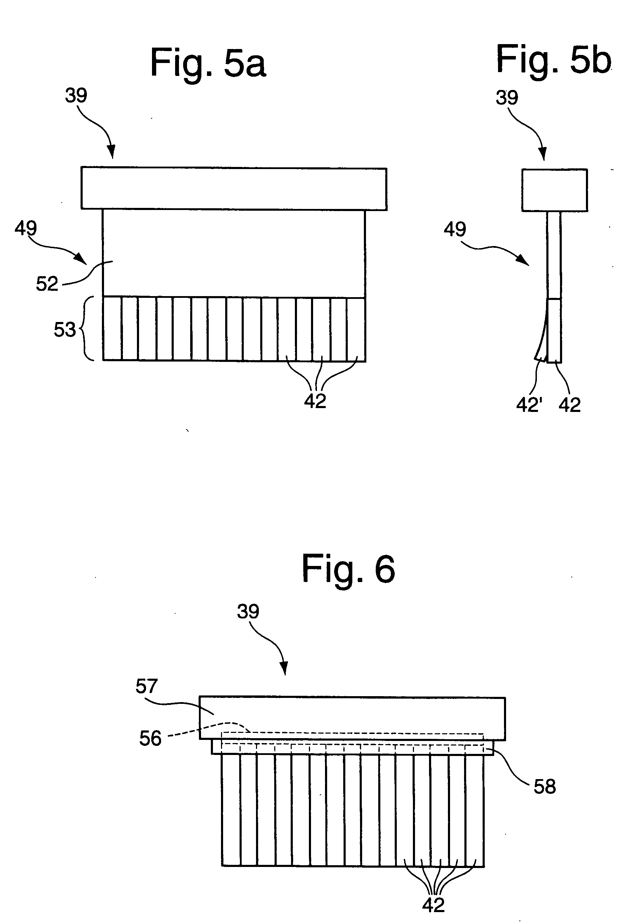

In Figur 5 a und b ist eine Vorderansicht und eine Seitenansicht einer alternativen Ausführungsform einer Nivelliereinrichtung 39 dargestellt. Diese Ausführungsform ist als Lippe 49 ausgebildet, welche einen ersten Bereich 51 aufweist, der durchgängig ausgebildet ist und einen zweiten Bereich 52 aufweist, welcher aus Einzelelementen 42 besteht. Die Auslenkung der Einzelelemente 42 erfolgt über die freie Weglänge der Einzelelemente 42. In Figur 5 b ist beispielsweise ein ausgelenktes Einzelsegment 42 dargestellt. Die in Figur 3 und Figur 4 beschriebenen alternativen Ausführungsformen der Einzelelemente 42 sind auch auf die Ausführungsform gemäß Figur 5 a und b anwendbar.

Anhand Figur 6 wird eine weitere alternative Ausführungsform der Nivelliereinrichtung 39 beschrieben. Die Einzelelemente 42 sind über eine Gelenkverbindung 56 zur Aufnahme 57 vorgesehen. Vorteilhafterweise ist nahe dem Gelenk 56 auf einer oder beiden Seiten der Einzelelemente 42 ein Dämpfungselement 58 vorgesehen. Durch die gelenkartige Aufnahme können die Einzelelemente 42 leichter ausgelenkt werden. Nach dem Auslenken findet über das oder die Dämpfungselemente 58 eine schnelle Beruhigung der Schwingung statt, so daß eine gleichmäßige und konstante Einnivellierung der Schichtdicke gegeben ist.

Die in den Figuren 3 bis 6 beschriebenen Ausführungsformen der Nivelliereinrichtung 39 können in ihrer Positionierung abweichend von der rechtwinkligen Ausrichtung zur Oberfläche der Werkstoffpulverschicht angeordnet sein. Es kann beispielsweise vorgesehen sein, daß in Abhängigkeit der Bewegungsrichtung ein Neigungswinkel der Einzelelemente 42 eingestellt wird, so daß die Einzelelemente 42 gegenüber der Bewegungsrichtung der Auftrageinheit 34 nacheilen. Zusätzlich können die Nivelliereinrichtungen 39 über eine Schwingungserzeugungseinrichtung an der Auftrageinheit 34 vorgesehen sein, so daß die Nivelliereinrichtung 39 beispielsweise quer zu der Linearbewegung während dem Auftragen des Werkstoffpulvers 17 eine oszillierende Bewegung durchführen.

Des weiteren ist vorgesehen, daß bei einem Einsatz von beispielsweise breiteren Einzelelementen 42 das freie Ende sowohl einen rechteckigen, einen V-förmigen abgeschrägten Abschluß oder dergleichen aufweisen. Des weiteren können die Einzelelemente 42 nicht nur aus metallischen Werkstoff, sondern auch aus weiteren Werkstoffen wie Kunststoff oder dergleichen ausgebildet sein. Vorteilhafterweise können die Einzelelemente eine Beschichtung mit einem Selbstreinigungseffekt aufweisen.

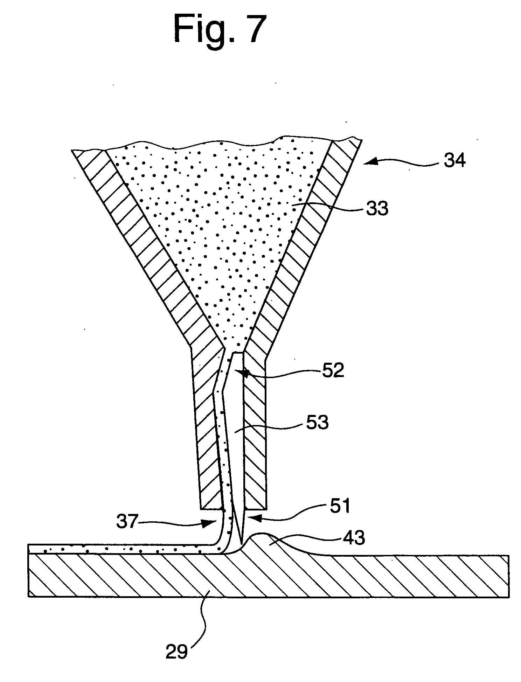

In Figur 7 ist eine alternative Ausführungsform zum selektiven Auftragen von Werkstoffpulver dargestellt. Die Auftrageinheit 34 weist eine schlitzförmige Öffnung 37 auf, in der mehrere nebeneinander angeordnete Abtastelemente 51 gegenüber Überhöhungen 43 und Unebenheiten auslenkbar beziehungsweise verschiebbar angeordnet ist. Das Abtastelement 51 weist an einem zum Formkörper 29 weisenden Ende eine filigrane Abtastspitze auf, mit welcher die Überhöhungen 43 exakt erfaßbar sind. An einem zum Aufnahmebehälter 33 weisenden Ende des Abtastelementes 51 ist ein Verschlußabschnitt 52 vorgesehen, der bei einem bestimmten Niveau des Abtastelementes 51 die Öffnung 37 schließt. Die Auftrageinheit 34 ist vorzugsweise in dem Niveau derart eingestellt, daß das Abtastelement 51 die Öffnung 37 schließt, sobald die Sollschichtdicke an einer Überhöhung 43 überfahren wird. Bei weiterem Überfahren der Überhöhung 43 kann vorgesehen sein, daß das Abtastelement 51 in sich federnd nachgiebig ist, um der Überhöhung 43 nachlaufen zu können.

Durch das Abtastelement 51 wird aufgrund unmittelbarer Abfrage der Oberfläche ein selektiver Auftrag des Werkstoffpulvers ermöglicht. Das Abtastelement 51 weist einen mittleren Bereich 53 auf, welcher unabhängig von der Stellung des Abtastelementes 51 in der Öffnung 37 im Querschnitt konstant bleibt. Dadurch kann der maximale Austrag des Werkstoffpulvers begrenzt sein. Die Abtastelemente 51, die in einer Reihe entlang der Öffnung 37 nebeneinander liegen, sind unabhängig voneinander bewegbar in der Öffnung 37 vorgesehen.

Alternativ zu der in Figur 7 dargestellten Ausführungsform kann vorgesehen sein, daß über ein an der Auftrageinheit 34 angeordnetes Abtastelement eine Verschlußklappe oder einen Verschlußriegel betätigt wird. Der dadurch gebildete Hebelmechanismus ist derart ausgebildet, daß die abgetasteten Istzustände unmittelbar die Freigabe der Öffnung 37 bewirkt. Des weiteren kann vorgesehen sein, daß in Abhängigkeit der Position des Abtastelementes durch Veränderung eines Magnetfeldes oder durch Induktion einer Spannung eine partielle Freigabe der Öffnung zum selektiven Auftragen des Werkstoffpulvers gegeben ist. Des weiteren kann auch vorgesehen sein, daß anstelle der Abtastnadel eine Scannleiste vorgesehen ist, welche die Oberfläche des Formkörpers beim Überfahren der Auftrageinheit erfaßt und unmittelbar im Anschluß Einzelöffnungen der Auftrageinheit über elektrische Signale ansteuert.

## Patentansprüche

1. Verfahren zur Herstellung eines Formkörpers (29) durch selektives Laserschmelzen, bei dem aus pulverförmigem, metallischem Werkstoff nach CAD-Daten eines Modells ein Formkörper (29) aufgebaut wird, bei dem mit einer Auftrageinheit (34) eine Pulverschicht aufgetragen wird und bei dem die aufgetragene Pulverschicht durch einen fokussierten Laserstrahl (27) mit einer darunter liegenden Schicht fixiert wird, **dadurch gekennzeichnet, daß** die Pulverschicht mit der Auftrageinheit (34) selektiv auf diejenigen Bereiche der Oberfläche des Formkörpers (29) aufgetragen wird, welche unterhalb und/oder an eine Ebene angrenzen, die durch die vorbestimmte Schichtdicke für die nächstfolgende zu verarbeitende Pulverschicht bestimmt wird.

2. Verfahren nach Anspruch 1, **dadurch gekennzeichnet, daß** diejenigen Bereiche, die unterhalb und/oder angrenzend an der Ebene der vorbestimmten Schichtdicke für die nächstfolgende zu verarbeitende Pulverschicht mittels einer Einrichtung erfaßt werden und daß das Werkstoffpulver fein definiert in den oder diejenigen Bereiche aufgetragen wird.

3. Verfahren nach Anspruch 1 oder 2, **dadurch gekennzeichnet, daß** die Auftrageinheit (34) ein- oder mehrmalig über der Oberfläche des Formkörpers (29) positioniert wird oder diesen überfährt.

4. Verfahren nach Anspruch 1, **dadurch gekennzeichnet, daß** die Pulverschicht durch zumindest einmaliges Positionieren über dem Formkörper (29) oder durch zumindest einmaliges Überfahren des Formkörpers (29) mit einer Nivelliereinrichtung (39) auf eine Sollschichtdicke einnivelliert wird und daß über die Sollschichtdicke des aufgetragenen Pulvers hinausragende Überhöhungen (43) der zuletzt mit dem Laserstrahl (27) aufgeschmolzenen Schicht durch die Nivelliereinrichtung (39) freigelegt werden.

5. Verfahren nach Anspruch 4, **dadurch gekennzeichnet, daß** der Laserstrahl (27) in mehreren Spuren über einen vorgegebenen Bereich der Werkstoffpulverschicht geführt wird und das aufgetragene Werkstoffpulver (17) an der Auftreffstelle des Laserstrahls (27) geschmolzen und die in den vorgegebenen Bereichen liegenden Überhöhung (43) zumindest teilweise aufgeschmolzen und mit der angrenzenden, aufgeschmolzenen Pulverschicht integriert werden.

6. Verfahren nach Anspruch 4 oder 5, **dadurch gekennzeichnet, daß** der Formkörper (29) zum Einnivellieren der aufzutragenden Werkstoffpulver (13) wenigstens zwei-, vorzugsweise dreimal von der Nivelliereinrichtung überfahren wird.

7. Verfahren nach einem der Ansprüche 4 bis 6, **dadurch gekennzeichnet, daß** das durch die Auftrageinheit (34) auf den Formkörper (29) aufgebrachte Werkstoffpulver (17) unmittelbar nachfolgend durch die Nivelliereinrichtung (39) auf das Sollmaß einnivelliert wird und vorzugsweise die Auftrageinheit (34) mit der Nivelliereinrichtung (39) zum Auftragen und Nivellieren gekoppelt wird.

8. Vorrichtung zur Herstellung eines Formkörpers (29) durch selektives Laserschmelzen, insbesondere zur Durchführung des Verfahrens nach einem der vorhergehenden Ansprüche 1 bis 7, mit einer Prozeßkammer (11), mit einer Aufbaukammer (18) für den Formkörper (29), mit einer Auftrageinheit (34), welche nach einer Positionierung des Formkörpers (29) auf der nächstfolgenden Sollschichtdicke beim zumindest einmaligen Positionieren über den Formkörper oder Überfahren des Formkörpers (29) eine Pulverschicht aufträgt, **dadurch gekennzeichnet, daß** die Auftrageinheit (34) Mittel (51, 39) zum selektiven Auftrag der Pulverschicht aufweist.

9. Vorrichtung nach Anspruch 8, **dadurch gekennzeichnet, daß** zumindest eine Nivelliereinrichtung (39) mit Einzelelementen (42) vorgesehen ist, welche die Pulverschicht auf die eingestellte Sollschichtdicke abzieht und die über die Sollschichtdicke hinausragenden Überhöhungen der darunterliegenden Schicht freilegt.

10. Vorrichtung nach Anspruch 9, **dadurch gekennzeichnet, daß** die Nivelliereinrichtung (39) zumindest eine Reihe von Einzelelementen (42) aufweist, die beim Überfahren von Überhöhungen (43) auslenkbar sind.

11. Vorrichtung nach Anspruch 9 oder 10, **dadurch gekennzeichnet, daß** die Einzelelemente (42) der Nivelliereinrichtung (39) freie Enden aufweisen, die in einer gemeinsamen Ebene (44) liegen.

12. Vorrichtung nach Anspruch 9 oder 11, **dadurch gekennzeichnet, daß** die Nivelliereinrichtung (39) als Bürste ausgebildet ist.

13. Vorrichtung nach Anspruch 12, **dadurch gekennzeichnet, daß** die als Bürste ausgebildete Nivelliereinrichtung (39) mehrere in einer Reihe liegende Borsten und wenigstens zwei Reihen für Borsten aufweist und vorzugsweise metallisch ausgebildete Borsten aufweist.

14. Vorrichtung nach Anspruch 12 oder 13, **dadurch gekennzeichnet, daß** die als Bürste ausgebildete Nivelliereinrichtung (39) eng aneinanderliegende Borsten aufweist.

15. Vorrichtung nach Anspruch 9 bis 14, **dadurch gekennzeichnet, daß** die Einzelelemente (42) der Nivelliereinrichtung (39) eine Lippe mit wenigstens einer Reihe von Lamellen aufweist.

16. Vorrichtung nach Anspruch 15, **dadurch gekennzeichnet, daß** die als Lamellen ausgebildeten Einzelelemente (42) aus einer dünnen Blechschicht, vorzugsweise durch Laserschneiden, hergestellt sind.

17. Vorrichtung nach Anspruch 15 oder 16, **dadurch gekennzeichnet, daß** die Lamellen durch feine Schnittlinien zueinander benachbart angeordnet sind.

18. Vorrichtung nach Anspruch 9 bis 10, **dadurch gekennzeichnet, daß** die Nivelliereinrichtung (39) Einzelelemente (32) aufweist, welche über eine Gelenkverbindung (56) auslenkbar angeordnet sind und vorzugsweise ein- oder beidseitig nahe dem Gelenk (56) ein Dämpfungselement (58) aufweist.

19. Vorrichtung nach Anspruch 8, **dadurch gekennzeichnet, daß** die Auftrageinheit (34) zumindest ein Abtastelement (51) mit einem mit der Öffnung (37) zusammenwirkenden Verschlußabschnitt (52) aufweist, welche in Abhängigkeit der Größe der Überhöhung (43) die Öffnung (37) der Auftrageinheit (34) öffnet oder schließt.

20. Vorrichtung nach Anspruch 19, **dadurch gekennzeichnet, daß** das Abtastelement (51) einen mittleren Bereich (53) aufweist, der unabhängig der Position des Verschlußabschnittes (52) in der Öffnung (37) mit einem weiteren Abschnitt der Öffnung (37) zusammenwirkt und die maximale Menge an Pulveraustrag begrenzt.
